# FASCICULE DE BREVET EUROPEEN

(11) **EP 1 080 446 B1**
(45) Date de publication et mention de la délivrance du brevet: **06.05.2009**
(21) Numéro de dépôt: 99940238.1
(22) Date de dépôt: 27.08.1999
(51) Int. Cl.: G06K 19/077

(54) **CARTE A CIRCUIT INTEGRE DU TYPE BI-STANDARD COMPORTANT UNE FENTE D'ISOLEMENT**
ZWEI-STANDARD IC-KARTE MIT EINEM ISOLIERUNGSSCHLITZ
BI-STANDARD INTEGRATED CIRCUIT CARD COMPRISING AN INSULATING SLOT

(30) Priorité: 11.09.1998 FR 9812112
(43) Date de publication de la demande: 07.03.2001
(73) Titulaire: Gemalto SA, 92190 Meudon (FR)
(72) Inventeur: HOUSSE, Nicolas, F-83640 Saint Zacharie (FR); CHABOD, Jean, Louis, F-25115 Puillez les Vignes (FR); THIEBAUD, Jean, Michel, F-25580 Etalans (FR)
(86) Numéro de dépôt international: PCT/FR1999/002049
(87) Numéro de publication internationale: WO 2000/016257

(56) Documents cités:
- EP-A- 0 521 778
- DE-C- 19 644 614
- US-A- 4 639 585

## Description

L'invention concerne une carte à circuit intégré du type bi-standard comportant une fente d'isolement.

L'invention concerne plus particulièrement une carte à circuit intégré à contact, du type dans lequel la carte (10) comporte un support (12) qui est en forme de plaque selon premier format, et qui porte au moins un microcircuit électronique (36), et du type dans lequel la carte (10) comporte une ligne de contour (20) qui est formée dans le support (12), autour d'une portion interne (18) comportant le microcircuit (36), pour délimiter, à l'intérieur d'une portion externe selon le premier format, une minicarte (18) selon un second format, la ligne de contour (20) étant définie par au moins une bretelle de liaison (32) interrompue par au moins une fente de contour (28), ladite bretelle (32) reliant la mini-carte (18) selon le second format à la portion externe selon le premier format, ladite bretelle étant limitée en largeur par ladite fente de contour (28), ladite bretelle permettant à la mini-carte (18) d'être détachée de la portion externe du support (12).

Les cartes à circuit intégré présentent pour la plupart un format qui est défini par une norme internationale et qui est celui d'une carte de crédit.

Cette norme définit, outre les dimensions extérieures de la carte, la position relative du microcircuit porté par la carte et, le cas échéant, celle des plages de contact qui permettent de raccorder le microcircuit à un circuit électronique d'un lecteur de carte approprié.

Toutefois, récemment, il est apparu le besoin de diminuer dans de notables proportions le format de la carte.

Cela est apparu notamment pour certaines applications telles que les téléphones portables.

Aussi, il a été défini une nouvelle norme dans laquelle on utilise le même genre de microcircuits et le même genre de plages de contact mais qui sont cette fois intégrés dans un support de format beaucoup plus petit.

II en résulte donc que ces deux normes internationales définissent deux standards de carte qui ne diffèrent que par la taille extérieure du support de la carte, l'épaisseur du support étant la même dans les deux cas.

II est donc apparu avantageux de proposer des cartes à circuit intégré qui soient susceptibles d'être utilisées selon l'un ou l'autre des deux formats.

Une première solution décrite dans le document DE19644614 pour réaliser une telle carte bi-standard, consiste à réaliser une carte à puce à contact selon un premier format, comprenant une fenêtre de réception d'une mini-carte, ladite mini-carte pouvant être retirée de la fenêtre et réinsérée à volonté. La carte support peut en outre comprendre des fentes qui prolongent les bords de la fenêtre de réception et permettent d'augmenter la souplesse en flexion des bords de la fenêtre, de manière à faciliter le retrait ou l'insertion de la mini-carte dans la fenêtre.

Une autre carte bi-standard, réalisée selon un autre mode de réalisation, est par exemple proposée dans le document EP-B-0.521.778.

Une telle carte dite bi-standard présente donc un support de carte dont les dimensions extérieures définissant le grand format de carte et les propriétés de résistance en flexion /torsion sont conformes respectivement aux normes ISO 7810 et ISO 7816. La carte présente également la mini-carte détachable ou séparable qui est conforme à la norme

GSM 11.11. La mini carte comporte un microcircuit et est délimitée par une ligne de contour autour de ce microcircuit.

Pour que l'utilisateur puisse à son choix utiliser la carte selon l'un ou l'autre des deux formats, il est prévu qu'il puisse séparer la carte selon le petit format de la portion externe du support de carte. A cet effet, la ligne de contour est réalisée sous la forme d'une fente de contour qui est découpée au travers de l'épaisseur de la carte et qui est interrompue en au moins un endroit, pour former une bretelle de liaison entre une portion interne du support de carte, aux dimensions du petit format, d'une portion externe aux dimensions du grand format de carte.

Généralement, il est prévu au moins une bretelle, voire plus. Pour utiliser la carte selon le petit format, l'utilisateur n'a qu'à rompre les bretelles de liaison pour détacher la minicarte de la portion externe du support de carte.

De préférence, pour faciliter la rupture des bretelles de liaison, mais aussi pour bien maîtriser l'endroit où s'effectue cette rupture, les bretelles de liaison sont pourvues d'au moins une entaille de prédécoupe qui forment une amorce de rupture de la bretelle.

Pour assurer une grande longévité au produit et notamment une conformité en flexion / torsion par rapport à la norme ISO 7816, il est nécessaire que la carte à circuit intégré puisse résister notamment à des contraintes de flexion et de torsion répétées imposées au corps de carte.

Ces flexions et torsions ne doivent bien entendu pas être transmises au microcircuit sous peine de l'endommager gravement.

Par ailleurs, les contraintes de flexion et de torsion ne doivent pas non plus conduire à la rupture accidentelle des bretelles de liaison pour le cas où l'utilisateur voudrait utiliser cette carte sous la forme de son grand format.

Or, par définition, les bretelles de liaison sont des zones fragiles, encore plus lorsqu'elles sont munies d'une prédécoupe.

Un premier objet de l'invention est donc de déterminer une nouvelle conception d'une carte à circuit intégré qui permet de protéger au mieux les bretelles de liaison de la minicarte ou des lieux de rupture le long d'une ligne de contour de la mini-carte.

Par ailleurs, pour un parfait fonctionnement de la carte, il est nécessaire de s'assurer que celle-ci est parfaitement plane. Or, on s'est aperçu, notamment dans les cas où la carte ne comporte que deux bretelles de liaison agencées sur deux bords opposés de la minicarte, qu'il pouvait apparaître une déformation de la portion interne du support de carte. Une telle déformation peut notamment avoir pour origine l'usinage, dans la portion interne de la carte, de la cavité destinée à recevoir le microcircuit et/ou la réalisation des entailles de prédécoupe au niveau de chacune des bretelles.

En effet, il peut apparaître dans l'épaisseur de la carte une dissymétrie des contraintes internes dues à ces différents usinages, ces différences de contraintes internes ayant pour résultat une incurvation de la minicarte et/ou de la carte.

L'invention a donc pour deuxième objet de proposer des moyens qui permettent d'éviter une telle déformation.

Pour répondre à l'ensemble de ces problèmes, l'invention propose donc une carte à circuit intégré du type décrit précédemment, caractérisée en ce que la carte comporte en outre, une fente d'isolement qui est agencée à proximité de ladite au moins une bretelle de liaison et s'étend sensiblement en regard et au voisinage de ladite bretelle de liaison

Selon d'autres caractéristiques de l'invention :
- la bretelle de liaison est constituée d'au moins une entaille de prédécoupe;
- la fente d'isolement s'étend le long de la ligne de contour au moins sur toute l'étendue de la bretelle;
- la fente d'isolement s'étend le long de la ligne de contour de manière à dépasser par ses deux extrémités les limites de la bretelle adjacente;
- la fente d'isolement s'étend parallèlement à ladite bretelle de liaison ;
- la fente d'isolement s'étend selon un segment de droite;
- la partie centrale de la fente d'isolement est sensiblement en forme d'arc de cercle ou de courbes;
- la fente d'isolement comporte une partie centrale qui est infléchie en direction de la bretelle;
- la partie centrale est en forme de V;
- la ligne de contour comporte deux bretelles de liaison qui sont agencées sur deux bords opposés de la minicarte et qui sont chacun munis d'une entaille de prédécoupe;
- la fente d'isolement est aménagée dans la portion externe du support.

D'autres caractéristiques et avantages de l'invention apparaîtront à la lecture de la description détaillée qui suit pour la compréhension de laquelle on se reportera aux dessins annexés dans lesquels :
- la figure 1 est une vue de dessus d'une carte à circuit intégré conforme aux enseignements de l'invention ;
- la figure 2 est une vue agrandie d'un détail de la figure 1 :
- la figure 3 est une vue en coupe partielle selon la ligne 3-3 de la figure 2 ;
- la figure 4 est une vue partielle en perspective de la carte de la figure 1 ; et
- les figures 5, 6 et 7 sont des vues similaires à celle de la figure 2 illustrant des variantes de réalisation de l'invention.

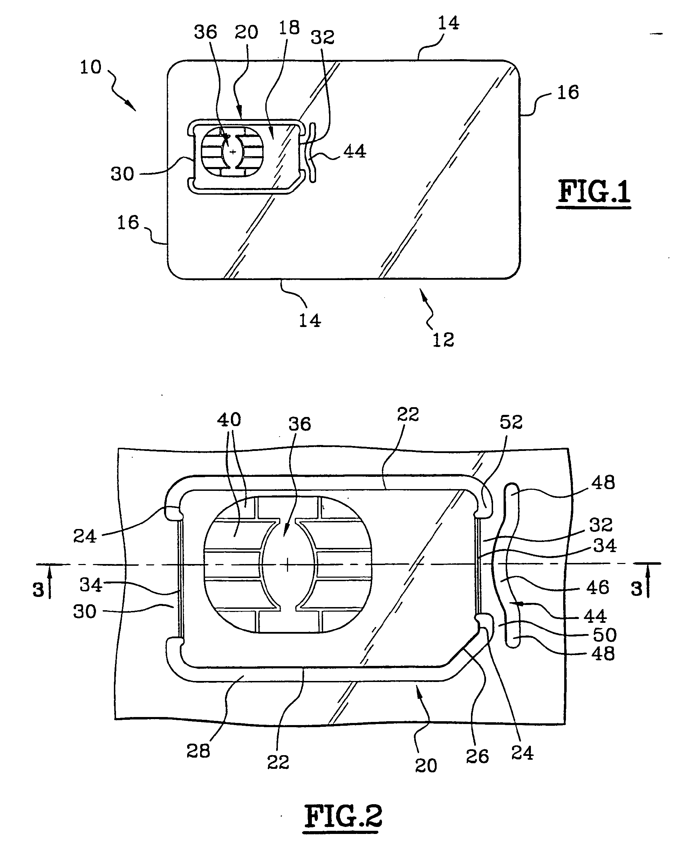

On a représenté sur la figure 1 une carte à circuit intégré 10 qui comporte un support de carte 12 de forme rectangulaire à coins arrondis dont le contour correspond à un premier format, par exemple normalisé. Le support de carte 12 est donc délimité par deux bords longitudinaux 14 et deux bords transversaux 16. A l'intérieur du support de carte 12, il est délimité une portion interne 18 dont les limites sont fixées par une ligne de contour 20.

Comme on peut le voir sur la figure 2, la portion interne 18 du support de carte 12 est destinée à former une minicarte selon un second format plus petit que le premier format du support de carte 12, la minicarte 18 présentant deux bords longitudinaux 22 et deux bords transversaux 24. Par ailleurs, la ligne de contour 20 présente un pan coupé 26 qui est agencé à l'un des coins de la minicarte 18 et qui est destiné à permettre une indexation de celle-ci.

Comme on peut le voir sur les figures 1 à 3, la ligne de contour 20 est formée par une fente de contour 28 interrompue par deux bretelles de liaison avant et arrière 30 et 32.

Dans l'exemple de réalisation illustré sur les figures, les bretelles de liaison s'étendent exclusivement le long des bords transversaux 24 de telle sorte que la fente de contour 28 s'étend de manière ininterrompue le long de chacun des deux bords longitudinaux 22 de la minicarte, mais aussi le long du pan coupé 26 et à chacune des deux extrémités des deux bords transversaux 24.

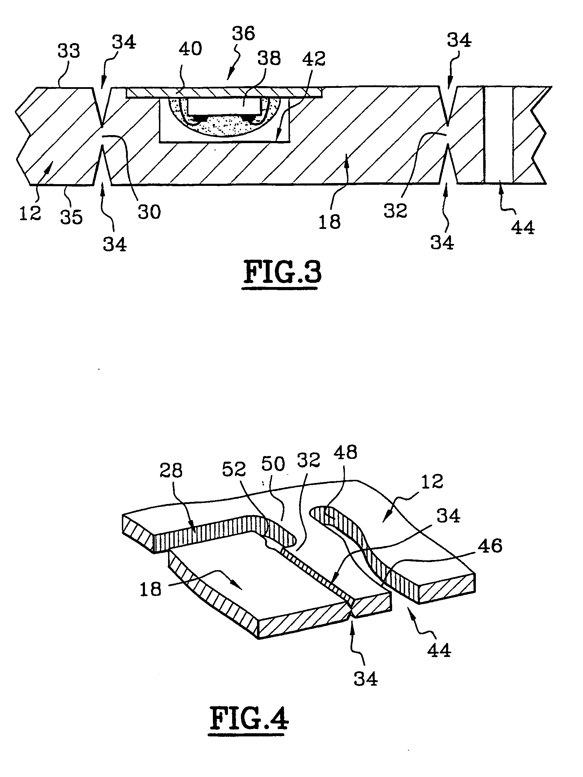

Comme on peut le voir plus particulièrement sur la figure 4, la fente 28 correspond à une découpe complète du support de carte dans le sens de son épaisseur. Au contraire, au niveau de chacune des deux bretelles de liaison 30, 32 on a formé des entailles de prédécoupe 34. Dans l'exemple de réalisation, chaque bretelle de liaison 30, 32 présente ainsi deux entailles 34 qui peuvent être aménagées sur tout ou partie de l'étendue de la bretelle respectivement dans la face supérieure 33 et dans la face inférieure 35 du support de carte12 pour fragiliser la bretelle de liaison 30, 32. Telles que représentées en coupe sur la figure 4, les entailles 34 présentent un profil en V et elles sont agencées en vis-à-vis l'une de l'autre dans le sens de l'épaisseur, en pointe contre pointe, en ne laissant subsister qu'une faible quantité de matière, sensiblement au centre de la carte selon la direction de son épaisseur.

Grâce à la ligne de contour 20 ainsi conçue, l'utilisateur peut aisément détacher la minicarte 18 par rapport à la portion externe du support de carte 12, ceci simplement en appuyant avec le doigt sur la partie interne 18 du support de carte, les bretelles étant alors amenées à céder au niveau des entailles de prédécoupe 34 qui forment une amorce de rupture.

Bien entendu, la carte selon l'invention comporte un module électronique 36 qui est porté par le support de carte, et plus précisément par la portion interne 18 de celui-ci.

Comme on peut le voir sur la figure 3, le module électronique 36 du mode de réalisation illustré comporte par exemple un microcircuit électronique 38 et des pistes de contact 40 qui sont destinées à coopérer avec des touches de contact d'un circuit électronique d'un lecteur approprié. Toutefois, l'invention peut aussi être mise en oeuvre dans le cadre des cartes à circuit intégré dites sans contact dans lesquelles le microcircuit 38 communique avec un lecteur approprié par le biais d'ondes electromagnétiques reçues et émises par une antenne reliée au microcircuit 38.

De manière connue, le module électronique 36 est reçu dans une cavité 42 aménagée dans l'épaisseur de la carte et débouchant dans la face supérieure 33 de celle-ci. Le module 36 est agencé dans la cavité 42 de telle sorte que la face supérieure des pistes de contact 40 soit agencée au même niveau que la face supérieure 33 de la carte.

De manière connue, le corps de carte peut être réalisé par moulage en matière plastique, auquel cas la cavité 42 peut être réalisé directement au cours de l'opération de moulage. Toutefois, le corps de carte peut aussi être réalisé par lamination, et éventuellement par colamination de plusieurs couches de matériaux éventuellement différents. Le plus souvent, la cavité 42 est réalisée par usinage et la ligne de contour 20, qui comporte la fente de contour 28 et les prédécoupes 34, est réalisée par exemple par poinçonnage.

Conformément aux enseignements de l'invention, la carte 10 comporte une fente d'isolement 44 qui est agencée à proximité de l'une des bretelles de liaison 30, 32, en l'occurrence la bretelle arrière 32. La fente d'isolement 44 est découpée sur l'intégralité de l'épaisseur du support de carte 12 et elle s'étend sensiblement parallèlement à la ligne de contour 20, c'est-à-dire en l'occurrence sensiblement parallèlement au bord transversal arrière 24 de la minicarte 18. Toutefois, la fente d'isolement 44 est décalée longitudinalement vers l'arrière par rapport au bord transversal 24, d'une distance qui est sensiblement de l'ordre de deux fois la largeur de la fente de contour 28.

Dans les exemples de réalisation illustrés sur les figures, la fente d'isolement 44 est formée dans la partie externe du support 12, mais on peut aussi prévoir qu'elle soit agencée dans la partie interne 18 de celui-ci, en étant toutefois adjacente à une bretelle de liaison 30, 32.

Plus précisément, la fente d'isolement 44 présente une portion centrale 46 et deux portions latérales 48. La portion centrale 46 s'étend sensiblement selon un arc de cercle qui est centré sensiblement sur la médiatrice de la bretelle 32, à l'extérieur de la minicarte, et dont la partie convexe est tournée vers la bretelle de liaison 32. De la sorte, en son centre, la partie centrale 46 est agencée au plus près de la bretelle 32 et de son entaille de prédécoupe 34. Au contraire, les parties latérales 48 de la fente d'isolement 44 sont agencées longitudinalement en retrait vers l'arrière par rapport à la ligne de contour 20 de la minicarte 18, et on peut voir qu'ils s'étendent chacun en regard d'un retour 52 de la fente de contour 28 qui correspond plus exactement à la partie de la fente 28 qui s'étend aux extrémités du bord transversal correspondant de la minicarte.

Le décalage des parties latérales 48 est suffisant pour laisser subsister, entre le retour 52 correspondant dans la fente de contour 28 et la partie latérale 48 de la fente d'isolement 44, un pont de matière 50 qui relie la bretelle 32 au reste de la portion externe du support de carte 12. Ainsi, les ponts de matière 50, dont la section est très faible, permettent d'éviter que des contraintes de torsion ou de flexion imposées au support de carte ne soient transmises à la bretelle de liaison 32.

Par ailleurs, le fait que la partie centrale 46 de la fente d'isolement 44 soit agencée très près de la bretelle 32 permet à celle-ci de se déformer, selon la direction longitudinale, notamment du fait de l'écrasement de matière qui survient au moment du poinçonnage de la prédécoupe 34, ce qui évite que cette opération de poinçonnage ne résulte en l'accumulation de contraintes internes au niveau de la minicarte.

On notera bien entendu que la fente d'isolement 44 ne fait en aucun cas partie dé la ligne de contour 20 de la minicarte 18. Elle n'intervient pas pour délimiter le périmètre de celle-ci. Toutefois, la fente d'isolement 44 sera avantageusement réalisée en même temps que la fente de contour 28, par le même procédé de fabrication.

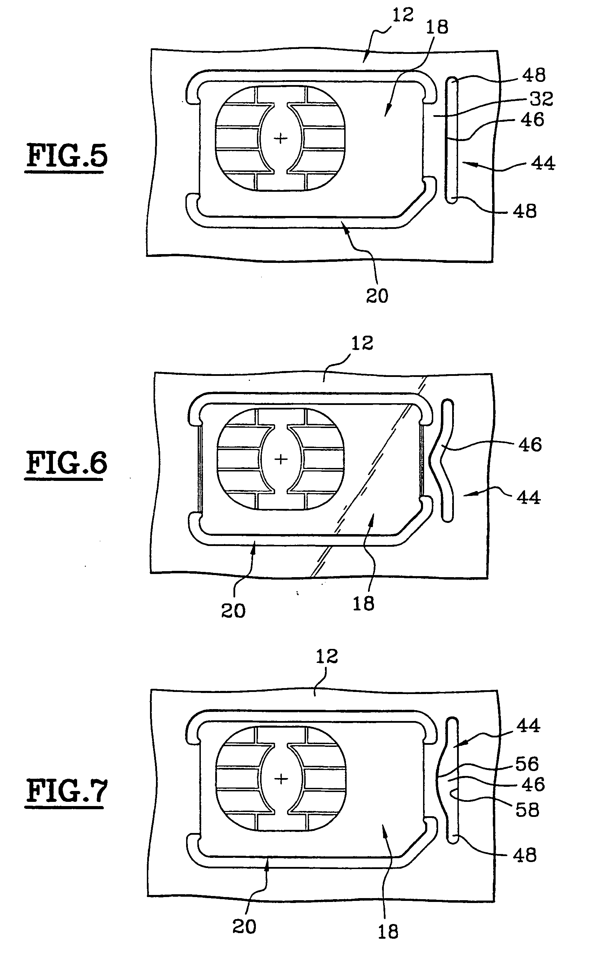

Le mode de réalisation de l'invention qui est illustré sur les figures 1 à 4 est une variante préférée. Cependant, ainsi qu'on l'a illustré aux figures 5 à 7, la fente d'isolement 44 peut présenter des formes variées.

Ainsi, à la figure 5, on a illustré une carte 10 qui présente une fente d'isolement 44 rectiligne, la partie centrale 46 de celle-ci se trouvant alors dans le prolongement des deux parties latérales 48. Dans l'exemple de réalisation de la figure 6, la partie centrale 46 se présente sous la forme d'un V formant un angle très ouvert et dont la pointe est dirigée vers la bretelle 32.

Dans les trois exemples qui viennent d'être illustrés, la fente d'isolement 44 présente des bords parallèles de sorte qu'elle possède une largeur constante. Cependant, ainsi qu'on l'a illustré à la figure 7, on peut prévoir que la fente d'isolement 44 ne soit pas délimitée par des bords parallèles. En effet, c'est le bord avant 56 de la fente 44 qui détermine pour l'essentiel la fonction technique de la fente d'isolement 44. Aussi, comme dans l'exemple de la figure 7, le bord arrière 58 peut être rectiligne ou présenter encore d'autres formes. Ainsi, on peut envisager que le bord arrière de la fente d'isolement 44 soit tel que la fente ne se présente plus sous la forme d'une fente mais plutôt sous la forme d'un orifice.

D'une manière générale, la ou les fente(s) d'isolement s'étend(ent) en regard de la ou des lignes de séparation imposée(s) notamment paralèllement ou en biais, ou en arc de cercle, par rapport à celle(s)-ci. Lorsqu'il y a au moins une bretelle, une fente d'isolement est amenée à s'étendre également en regard de la bretelle. Une fente d'isolement peut être composée de plusieurs fentes décalées les unes par rapport aux autres.

## Revendications

1. Carte à circuit intégré à contact, du type dans lequel la carte (10) comporte un support (12) qui est en forme de plaque selon un premier format, et qui porte au moins un microcircuit électronique (36), et du type dans lequel la carte (10) comporte une ligne de contour (20) qui est formée dans le support (12), autour d'une portion interne (18) comportant le microcircuit (36), pour délimiter, à l'intérieur d'une portion externe selon le premier format, une mini-carte (18) selon un second format, la ligne de contour (20) étant définie par au moins une bretelle de liaison (32) interrompue par au moins une fente de contour (28), ladite bretelle (32) reliant la mini-carte (18) selon le second format à la portion externe selon le premier format, ladite bretelle étant limitée en largeur par ladite fente de contour (28), ladite bretelle permettant à la mini-carte (18) d'être détachée de la portion externe du support (12), **caractérisée en ce que** la carte (10) comporte en outre, une fente d'isolement (44) qui est agencée à proximité de ladite au moins une bretelle de liaison (32) et s'étend sensiblement en regard et au voisinage de ladite bretelle de liaison (32).

2. Carte à circuit intégré selon la revendication 1, **caractérisée en ce que** la bretelle de liaison (32) est constituée d'au moins une entaille de prédécoupe (34).

3. Carte à circuit intégré selon la revendication 1, **caractérisée en ce que** la fente d'isolement (44) s'étend le long de la ligne de contour au moins sur toute l'étendue de la bretelle.

4. Carte à circuit intégré selon l'une des revendications 1 à 3, **caractérisée en ce que** la fente d'isolement (44) s'étend le long de la ligne de contour de manière à dépasser par ses deux extrémités (48) les limites de la bretelle (30,32) adjacente.

5. Carte à circuit intégré selon l'une des revendications précédentes, **caractérisée en ce que** ladite fente d'isolement s'étend parallèlement à ladite bretelle de liaison.

6. Carte à circuit intégré selon l'une quelconque des revendications précédentes, **caractérisée en ce que** la fente d'isolement (44) s'étend selon un segment de droite.

7. Carte à circuit intégré selon la revendication 4, **caractérisée en ce que** la partie centrale (46) de la fente d'isolement est sensiblement en forme d'arc de cercle.

8. Carte à circuit intégré selon l'une quelconque des revendications 1 à 5, **caractérisée en ce que** la fente d'isolement (44) comporte une partie centrale (46) qui est infléchie en direction de la bretelle (32).

9. Carte à circuit intégré selon la revendication 8, **caractérisée en ce que** la partie centrale (46) est en forme de V.

10. Carte à circuit intégré selon la revendication 1 à 9, **caractérisée en ce que** la ligne de contour (20) comporte deux bretelles de liaison (30,32) qui sont agencées sur deux bords opposés (24) de la mini-carte (18) et qui sont chacun munis d'une entaille de prédécoupe (34).

11. Carte à circuit intégré selon l'une quelconque des revendications précédentes, **caractérisée en ce que** la fente d'isolement (44) est aménagée dans la portion externe du support (12).

## Claims

1. A contact printed circuit board of the type in which the board (10) includes a support (12) which has the shape of a plate, according to a first format, and which carries at least one electronic microcircuit (36), and of the type in which the board (10) includes a contour line (20) which is formed in the support (12), around an inner portion (18) including the microcircuit (36), so as define, inside an outer portion according to the first format, a mini-card (18), according to a second format, the contour line (20) being defined by at least one connecting link (32) interrupted by at least a contour slit (28), said link connecting the mini-card (18) according to the second format to the outer portion according to the first format, said link being limited in width by said contour slit (28), said link enabling the mini-card (18) to be detached from the outer portion of the support (12), **characterized in that** the board (10) further includes a separation slit (44) which is arranged close to said at least one connecting link (32) and extends substantially opposite and in the vicinity of said connecting link (32).

2. A printed circuit board according to claim 1, **characterized in that** the connecting link (32) is provided with at least one score (34).

3. A printed circuit board according to claim 1, **characterized in that** the separation slit (44) extends along the contour line at least on the whole length of the link.

4. A printed circuit board according to claim 1 to 3, **characterized in that** the separation slit (44) extends along the contour line so that both ends (48) thereof go beyond the limits of the adjacent link (30, 32).

5. A printed circuit board according to one of the preceding claims, **characterized in that** said separation slit (44) extends in parallel with said connecting link.

6. A printed circuit board according to any one of the preceding claims, **characterized in that** the separation slit (44) extends along a line segment.

7. A printed circuit board according to claim 4, **characterized in that** the central part (46) of the separation slit (44) is substantially arc-shaped.

8. A printed circuit board according to any one of claims 1 to 5, **characterized in that** the separation slit (44) includes a central part (46) which is bent towards the link (32).

9. A printed circuit board according to claim 8, **characterized in that** the central part (46) is V-shaped.

10. A printed circuit board according to claim 1 to 9, **characterized in that** the contour line (20) includes two connecting links (30, 32) which are arranged on two opposite edges (24) of the mini-card (18) and which are, each, provided with a score (34).

11. A printed circuit board according to any one of the preceding claims, **characterized in that** the separation slit (44) is arranged in the outer portion of the support (12).

## Patentansprüche

1. Karte mit integriertem Schaltkreis und Kontakt von dem Typ, in dem die Karte (10) einen Träger (12) umfasst, der die Form einer Platte gemäß einem ersten Format aufweist und der wenigstens einen elektronischen Mikroschaltkreis (36) trägt, und von dem Typ, in dem die Karte (10) eine Konturlinie (20) umfasst, die in dem Träger (12) um einen internen Abschnitt (18) gebildet ist, der den Mikroschaltkreis (36) umfasst, um im Innern eines externen Abschnitts gemäß dem ersten Format eine Minikarte (18) gemäß einem zweiten Format zu begrenzen, wobei die Konturlinie (20) durch wenigstens eine Verbindungslinie (32) definiert wird, die durch wenigstens einen Konturspalt (28) unterbrochen wird, wobei die genannte Verbindungslinie (32) die Minikarte (18) gemäß dem zweiten Format mit dem externen Abschnitt gemäß dem ersten Format verbindet, wobei die genannte Verbindungslinie in der Breite durch den genannten Konturspalt (28) begrenzt ist, wobei die genannte Verbindungslinie es der Minikarte (18) ermöglicht, von dem externen Abschnitt des Trägers (12) gelöst zu werden, **dadurch gekennzeichnet, dass** die Karte (10) darüber hinaus einen Isolationsspalt (44) umfasst, der in der Nähe der genannten wenigstens einen Verbindungslinie (32) angeordnet ist und sich deutlich gegenüber und in der Nachbarschaft der genannten Verbindungslinie (32) erstreckt.

2. Karte mit integriertem Schaltkreis gemäß Anspruch 1, **dadurch gekennzeichnet, dass** die Verbindungslinie (32) aus wenigstens einem vorausgeschnittenen Einschnitt (34) gebildet wird.

3. Karte mit integriertem Schaltkreis gemäß Anspruch 1, **dadurch gekennzeichnet, dass** der Isolationsspalt (44) sich entlang der Konturlinie wenigstens über die gesamte Ausdehnung der Verbindungslinie erstreckt.

4. Karte mit integriertem Schaltkreis gemäß Anspruch 1 bis 3, **dadurch gekennzeichnet, dass** der Isolationsspalt (44) sich entlang der Konturlinie derart erstreckt, dass er durch seine zwei Enden (48) die Grenzen der anliegenden Verbindung (30, 32) überragt.

5. Karte mit integriertem Schaltkreis gemäß einem der vorherigen Ansprüche, **dadurch gekennzeichnet, dass** der genannte Isolationsspalt sich parallel zu der genannten Verbindungslinie erstreckt.

6. Karte mit integriertem Schaltkreis gemäß einem der vorherigen Ansprüche, **dadurch gekennzeichnet, dass** der Isolationsspalt (44) sich gemäß einem Segment auf der rechten Seite erstreckt.

7. Karte mit integriertem Schaltkreis gemäß Anspruch 4, **dadurch gekennzeichnet, dass** der zentrale Teil (46) des Isolationsspaltes deutlich eine kreisförmige Bogenform aufweist.

8. Karte mit integriertem Schaltkreis gemäß Anspruch 1 bis 5, **dadurch gekennzeichnet, dass** der Isolationsspalt (44) einen zentralen Teil (46) umfasst, der in Richtung der Verbindungslinie (32) geneigt ist.

9. Karte mit integriertem Schaltkreis gemäß Anspruch 8, **dadurch gekennzeichnet, dass** der zentrale Teil (46) die Form eines Vs aufweist.

10. Karte mit integriertem Schaltkreis gemäß Anspruch 1 bis 9, **dadurch gekennzeichnet, dass** die Konturlinie (20) zwei Verbindungslinien (30, 32) umfasst, die auf zwei gegenüberliegenden Rändern (24) der Minikarte (18) angeordnet sind und die jeweils mit einem vorausgeschnittenen Einschnitt (34) versehen sind.

11. Karte mit integriertem Schaltkreis gemäß einem der vorherigen Ansprüche, **dadurch gekennzeichnet, dass** der Isolationsspalt (44) in dem externen Abschnitt des Trägers (12) angeordnet ist.
